# EUROPÄISCHE PATENTANMELDUNG

(11) **EP 2 913 124 A2**
(43) Veröffentlichungstag der Anmeldung: **02.09.2015**
(21) Anmeldenummer: 15152811.4
(22) Anmeldetag: 28.01.2015
(51) Int. Cl.: B22F 3/105, B22F 3/24

(54) **Erzeugung von Druckeigenspannungen bei generativer Fertigung**

(30) Priorität: 28.02.2014 DE 102014203711
(71) Anmelder: MTU Aero Engines AG, 80995 München (DE)
(72) Erfinder: Schlick, Georg, 80809 München (DE); Göhler, Thomas, 85221 Dachau (DE); Hanrieder, Herbert, 85411 Hohenkammer (DE); Jakimov, Andreas, 81245 München (DE)

(57) **Zusammenfassung**

Die vorliegende Erfindung betrifft eine Vorrichtung und ein Verfahren zur generativen Herstellung von Bauteilen, insbesondere zur Herstellung von Bauteilen für Strömungsmaschinen, bei welchem das Bauteil zumindest teilweise schichtweise auf einem Substrat oder einem vorher erzeugten Teil des Bauteils aufgebaut wird, wobei ein schichtweiser Aufbau durch lagenweises Aufschmelzen von Pulvermaterial mit einem energiereichen Strahl und Erstarren der Pulverschmelze erfolgt, wobei sich der energiereiche Strahl entlang eines Pfades über das Pulvermaterial bewegt und wobei durch den energiereichen Strahl an der Front des Pfades ein Aufschmelzbereich gebildet wird und nachfolgend im Pfad ein Erstarrungsbereich entsteht, wobei im Erstarrungsbereich die Temperaturverteilung zeitlich und/oder örtlich so gewählt wird, dass im erstarrten oder erstarrenden Pulvermaterial Druckeigenspannungen entstehen.

## Beschreibung

### HINTERGRUND DER ERFINDUNG

### GEBIET DER ERFINDUNG

Die vorliegende Erfindung betrifft ein Verfahren zur generativen Herstellung von Bauteilen, insbesondere zur Herstellung von Bauteilen für Strömungsmaschinen, bei welchem das Bauteil schichtweise auf einem Substrat oder einem vorher erzeugten Teil des Bauteils aufgebaut wird, wobei ein schichtweiser Aufbau durch lagenweises Aufschmelzen von Pulvermaterial mit einem energiereichen Strahl und Erstarren der Schmelze erfolgt.

### STAND DER TECHNIK

Generative Herstellungsverfahren zur Herstellung eines Bauteils, wie beispielsweise selektives Laserschmelzen, Elektronenstrahlschmelzen oder Laserauftragsschweißen werden in der Industrie für das sogenannte rapid tooling, rapid prototyping oder auch für die Herstellung von Serienprodukten im Rahmen des rapid manufacturing eingesetzt. Insbesondere können derartige Verfahren auch zur Herstellung von Turbinenteilen, insbesondere von Teilen für Flugtriebwerke eingesetzt werden, bei denen beispielsweise auf Grund des verwendeten Materials derartige generative Herstellungsverfahren vorteilhaft sind. Ein Beispiel hierfür findet sich in der DE 10 2010 050 531 A1.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser, Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2006 058 949 A1 ist ebenfalls eine Vorrichtung und ein Verfahren zur schnellen Herstellung und Reparatur von Schaufelspitzen von Schaufeln einer Gasturbine, insbesondere eines Flugzeugtriebwerks bekannt, wobei eine induktive Heizung zusammen mit Laser- oder Elektronenstrahlsintern eingesetzt wird.

Eine induktive Heizung des herzustellenden Bauteils im Zusammenhang mit der generativen Herstellung eines Bauteils mit Hilfe von selektivem Laserschmelzen ist auch in der EP 2 359 964 A1 beschrieben.

Die WO 2008/071 165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Aus der WO 2012/048 696 A2 ist zudem ein Verfahren zur generativen Herstellung von Bauteilen bekannt, bei dem mit Hilfe eines zweiten hochenergetischen Strahls zusätzlich zu dem hochenergetischen Strahl, der zum Aufschmelzen des Pulvers verwendet wird, eine nachfolgende Wärmebehandlung des erstarrten Materials durchgeführt wird. Gleichzeitig wird zudem eine globale Erwärmung des Bauteils auf eine bestimmte Mindesttemperatur eingesetzt.

Obwohl aus dem Stand der Technik somit bekannt ist, bei einem generativen Herstellverfahren, bei welchem Pulverpartikel mittels Bestrahlung zur Bildung eines Bauteils geschmolzen oder gesintert werden, zusätzlich eine Beheizung des Bauteils vorzusehen, bestehen weiterhin Probleme derartige generative Herstellungsverfahren für Hochtemperaturlegierungen einzusetzen, die nicht schmelz- bzw. schweißbar sind, da es bei derartigen Legierungen häufig zu inakzeptablen Rissen kommt.

### OFFENBARUNG DER ERFINDUNG

### AUFGABE DER ERFINDUNG

Es ist deshalb Aufgabe der vorliegenden Erfindung, ein Verfahren sowie eine Vorrichtung zur generativen Herstellung von Bauteilen bereitzustellen, bei dem in effektiver Weise die Bildung von Rissen während der Herstellung vermieden wird. Gleichzeitig soll die Vorrichtung einfach aufgebaut und das Verfahren einfach durchführbar sein.

### TECHNISCHE LÖSUNG

Diese Aufgabe wird gelöst durch ein Verfahren mit den Merkmalen des Anspruchs 1 und eine Vorrichtung mit den Merkmalen des Anspruchs 9. Vorteilhafte Ausgestaltungen sind Gegenstand der abhängigen Ansprüche.

Die Erfindung geht aus von der Erkenntnis, dass die im Stand der Technik beschriebene Erwärmung des erstarrten bzw. erstarrenden Bauteils, sei es durch lokale oder globale Erwärmung des Bauteils, und die aufgrund der Temperatureinwirkung stattfindende Relaxation des Bauteilmaterials teilweise nicht ausreichend sein kann, um Rissbildung zu vermeiden, so dass zusätzlich als Gegenmaßnahme zur Vermeidung von Rissen, Druckspannungen in das Bauteil eingebracht werden, um so die Rissbildung wirksam zu verhindern. Hierzu kann im Erstarrungsbereich die Temperaturverteilung zeitlich und/oder örtlich so eingestellt werden, dass im erstarrenden Material bzw. im erstarrten Bauteil Druckeigenspannungen vorliegen. Unter Erstarrungsbereich wird hierbei der Bereich des Bauteils verstanden, den der hochenergetische Strahl, wie beispielsweise ein Laser, der zum Aufschmelzen des Pulvers verwendet wird, gerade verlassen hat. Entsprechend kann der Erstarrungsbereich auch aufgeschmolzenes Material aufweisen. Darüber hinaus erstreckt sich der Erstarrungsbereich zeitlich und/oder örtlich so weit, bis das erstarrte Material unter einen bestimmten Temperaturbereich abgefallen ist, beispielsweise unter die Hälfte des Schmelztemperatur des verwendeten Pulvermaterials bzw. unter ein Drittel der Schmelztemperatur des Materials, so dass gewährleistet ist, dass im erstarrten Bereich, der sich dem Erstarrungsbereich zeitlich und/oder örtlich anschließt, keine wesentlichen Strukturveränderungen mehr ergeben können.

Die Erzielung von Druckeigenspannungen im zu erzeugenden Bauteil und insbesondere im Erstarrungsbereich kann dadurch bewirkt werden, dass im Erstarrungsbereich eine Wärmebehandlung mit Heizen und/oder Kühlen des erstarrenden Pulvermaterials durchgeführt wird. Da das Heizen nachfolgend zum Aufschmelzen durchgeführt wird, wird es auch als Nachwärmen bezeichnet und entsprechend wird der Bereich, in dem das Nachwärmen stattfindet, als Nachwärmbereich bezeichnet. In gleicher Weise wird der Bereich, in dem das starre Pulvermaterial gekühlt wird, als Kühlbereich bezeichnet. Da sich der Erstarrungsbereich mit dem Aufschmelzbereich über der Oberfläche des zu erzeugenden Bauteils bewegt, werden auch der Nachwärmbereich und/oder der Kühlbereich über das Bauteil bewegt, so dass sich in der zeitlichen Abfolge der Erzeugung des Bauteils die entsprechenden Bereiche an verschiedenen Orten des Bauteils befinden. Gleichzeitig durchläuft aber jeder Bereich des Bauteils, der so hergestellt worden ist, die Phase des Aufschmelzens und des Erstarrens, wobei im Erstarren eine Phase der Nachwärmung und/oder der Kühlung durchlaufen wird. Vorzugsweise kann eine kombinierte Behandlung mit Kühlen nach dem Aufschmelzen und Erwärmen nach dem Kühlen stattfinden, so dass zeitlich und/oder örtlich gesehen der Kühlbereich zwischen dem Aufschmelzbereich und dem Nachwärmbereich vorgesehen ist.

Der Nachwärmbereich und/oder der Kühlbereich können sich über den Pfad des energiereichen Strahls hinaus erstrecken, so dass auch Bereiche, die nicht vorher unmittelbar aufgeschmolzen worden sind, der entsprechenden Wärmebehandlung bzw. Kühlbehandlung unterzogen werden.

Insbesondere können der Nachwärmbereich und/oder der Kühlbereich konzentrisch um den Aufschmelzbereich vorgesehen sein, wobei insbesondere der Kühlbereich nur teilweise ringförmig ausgebildet sein kann.

Der Nachwärmbereich kann als ringförmiger Heizbereich ausgebildet sein, der den Aufschmelzbereich insbesondere konzentrisch umgibt, so dass durch den ringförmigen Heizbereich sowohl eine Vorwärmung des noch nicht aufgeschmolzenen Pulvers als auch eine Nachwärmung des erstarrenden Materials ermöglicht wird.

Das Bauteil und/oder das Pulvermaterial können zusätzlich lokal oder global, also über die gesamte Pulverschicht und/oder das gesamte Bauteil, vorgewärmt oder vorgekühlt werden.

Die Vorwärmtemperatur, auf die das Bauteil und/oder das Pulvermaterial gebracht werden, kann im Bereich von 40% bis 90%, 50% bis 90%, insbesondere 60% bis 70% der Schmelztemperatur des entsprechenden Materials gewählt werden.

Die Kühltemperatur, auf die das Bauteil bzw. der Erstarrungsbereich gebracht werden, kann im Bereich von 30% bis 60% der Schmelztemperatur, vorzugsweise um 50% oder weniger der Schmelztemperatur des eingesetzten Materials gewählt werden.

Eine entsprechende Vorrichtung zur Durchführung des Verfahrens umfasst entsprechend mindestens eine Kühleinrichtung, mit der mindestens ein Bereich nahe dem Aufschmelzbereich gekühlt werden kann. Die Kühleinrichtung kann einen von einem Kühlmedium, wie beispielsweise Wasser oder dergleichen, durchströmten Kühlkörper, oder ein Peltier-Element oder eine Sprüheinrichtung für ein Kühlmedium, wie beispielsweise ein Kühlgas, umfassen. Die Kühleinrichtung kann beweglich ausgebildet sein bzw. so ausgebildet sein, dass die Kühlung an verschiedenen Orten stattfinden kann, so dass der Kühlbereich genauso wie ein Nachwärmbereich oder ein Vorwärmbereich, in fester Beziehung zu dem energiereichen Strahl relativ zur Pulverlage bewegbar ist.

### KURZBESCHREIBUNG DER FIGUREN

Die beigefügten Zeichnungen zeigen in rein schematischer Weise in
- Fig.1: eine schematische Darstellung einer Vorrichtung zur generativen Herstellung von Bauteilen am Beispiel des selektiven Laserschmelzens;
- Fig. 2: eine Draufsicht auf eine erfindungsgemäße Vorrichtung zur parallelen Herstellung von insgesamt drei Bauteilen mit zwei verschiebbaren Induktionsspulen;
- Fig. 3: eine Detailansicht des Bearbeitungsbereichs aus Fig. 2;
- Fig. 4: eine Darstellung einer weiteren Gestaltung der Temperaturzonen um den Auftreffpunkt des Laserstrahls bzw. eines Aufschmelzbereichs; und in
- Fig. 5: eine Darstellung einer noch weiteren Gestaltung der Temperaturzonen um den Auftreffpunkt des Laserstrahls bzw. eines Aufschmelzbereichs.

### AUSFÜHRUNGSBEISPIELE

Weitere Vorteile, Kennzeichen und Merkmale der vorliegenden Erfindung werden bei der nachfolgenden detaillierten Beschreibung eines Ausführungsbeispiels deutlich, wobei die Erfindung nicht auf dieses Ausführungsbeispiel beschränkt ist. Sämtliche funktionell oder strukturell miteinander in Verbindung stehenden Komponenten oder Bestandteile der Erfindung können, auch wenn sie nicht einzeln beschrieben sind, einzeln und in beliebigen Kombinationen zueinander im Sinne der Erfindung eingesetzt werden.

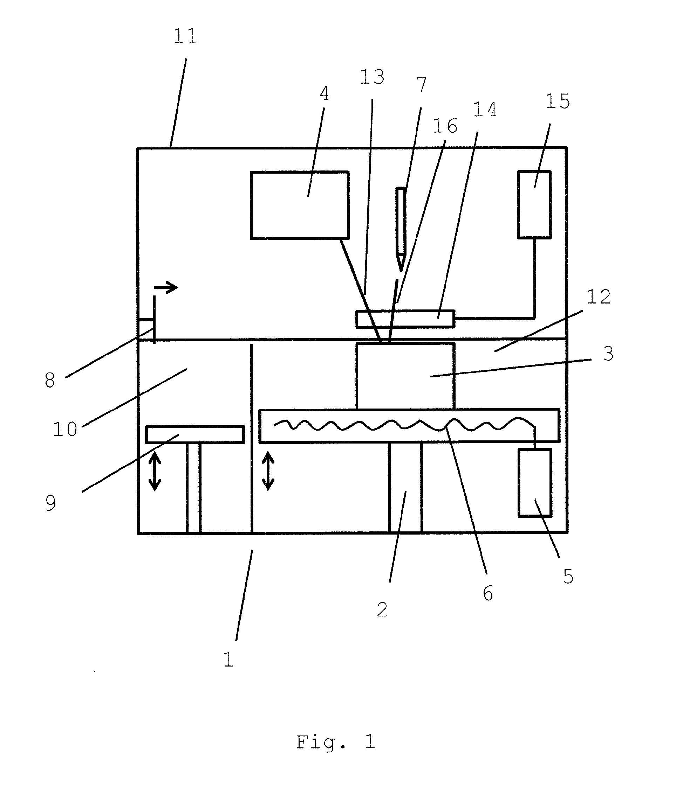

Die Figur 1 zeigt in einer rein schematischen Darstellung eine Vorrichtung 1, wie sie beispielsweise für das selektive Laserschmelzen zur generativen Herstellung eines Bauteils Verwendung finden kann. Die Vorrichtung 1 umfasst einen Hubtisch 2, auf dessen Plattform ein Halbzeug 3 angeordnet ist, auf dem schichtweise Material abgeschieden wird, um ein dreidimensionales Bauteil zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 13 eines Lasers 4 durch Aufschmelzen mit dem bereits vorhandenen Halbzeug 3 verbunden. Die Verbindung des Pulvermaterials in einer Pulverschicht mit dem Halbzeug 3 erfolgt durch den Laser 4 abhängig von der gewünschten Kontur des zu fertigenden Bauteils, sodass beliebige, dreidimensionale Formen erzeugt werden können. Entsprechend wird der Laserstrahl 13 über das Pulverbett 12 geführt, um durch unterschiedliche Auftreffpunkte auf dem Pulverbett entsprechend der Kontur des dreidimensionalen Bauteils in der der erzeugten Schichtebene entsprechenden Schnittebene des Bauteils Pulvermaterial aufzuschmelzen und mit dem bereits erzeugten Teil eines Bauteils oder einem anfänglich bereit gestellten Substrat zu verbinden. Hierbei kann der Laserstrahl 13 durch eine geeignete Ablenkeinheit über die Oberfläche des Pulverbetts 12 geführt werden und/oder das Pulverbett könnte gegenüber dem Laserstrahl 13 bewegt werden.

Um unerwünschte Reaktionen mit der Umgebungsatmosphäre beim Aufschmelzen oder Sintern zu vermeiden, kann der Prozess in einem abgeschlossenen Raum, der durch ein Gehäuse 11 der Vorrichtung 1 bereit gestellt wird, stattfinden und es kann zudem eine inerte Gasatmosphäre bereit gestellt, um beispielsweise Oxidation des Pulvermaterials und dergleichen beim Abscheiden zu vermeiden. Als inertes Gas kann beispielsweise Stickstoff verwendet werden, welches über eine nicht dargestellte Gasversorgung bereit gestellt wird.

Anstelle des Inertgases könnte auch ein anderes Prozessgas verwendet werden, wenn beispielsweise eine reaktive Abscheidung des Pulvermaterials gewünscht ist.

Darüber hinaus sind auch andere Strahlungsarten denkbar, wie beispielsweise Elektronenstrahlen oder andere Teilchenstrahlen oder Lichtstrahlen, die bei der Stereolithographie eingesetzt werden, und die zum Aufschmelzen des Pulvers führen können.

Zur Einstellung der gewünschten Temperaturen im erzeugten Bauteil 3 und/oder im Pulverbett 12 ist im Hubtisch eine elektrische Widerstandsheizung mit einer Widerstandsheizungssteuerung 5 und einem elektrischen Heizdraht 6 vorgesehen, so dass das Pulverbett 12 und das Bauteil 3 durch entsprechendes Erwärmen von unten auf eine gewünschte Temperatur gebracht werden können und/oder ein gewünschter Temperaturgradient, insbesondere zu der gerade bearbeiteten Schicht an der Oberfläche des Pulverbetts, eingestellt werden kann. In ähnlicher Weise ist eine Beheizung mit einer Heizungseinrichtung von der Oberseite des Pulverbetts 12 und des bereits erstellten Bauteils 3 vorgesehen, die bei dem gezeigten Ausführungsbeispiel durch eine Induktionsheizung mit einer Induktionsspule 14 und einer Induktionsheizungssteuerung 15 gebildet ist. Die Induktionsspule 14 umgibt hierbei den Laserstrahl 13 und ist bei Bedarf parallel zur Oberfläche des Pulverbetts 12 entsprechend dem Laserstrahl 13 bewegbar.

Anstelle der dargestellten Induktionsheizung kann auch jede andere Heizungsart, die eine Erwärmung des Pulverbetts 12 und des bereits erzeugten Bauteils 3 von der Oberseite ermöglicht, vorgesehen werden, wie beispielsweise Strahlungsheizgeräte, wie Infrarotstrahler und dergleichen. Auch eine Beheizung mit einem zweiten hochenergetischen Strahl, wie einem Laserstrahl oder einem Elektronenstrahl, der dem ersten hochenergetischen Strahl 13, der das Aufschmelzen des Pulvers bewirkt, nachgeführt wird, ist denkbar.

In gleicher Weise kann auch die Widerstandsheizung 5, 6 durch geeignete andere Heizungsarten, die eine Erwärmung des Pulverbetts 12 und des bereits erzeugten Bauteils 3 von unten ermöglichen, ersetzt werden. Darüber hinaus können weitere Heizeinrichtungen umgebend um das bereits erzeugte Bauteil 3 und/oder das Pulverbett 12 vorgesehen werden, um eine seitliche Erwärmung des Pulverbetts 12 und/oder des bereits erzeugten Bauteils 3 zu ermöglichen.

Neben Heizeinrichtungen können auch Kühleinrichtungen oder kombinierte Heiz/Kühleinrichtungen vorgesehen werden, um zusätzlich oder alternativ zu einer Erwärmung des bereits erzeugten Bauteils 3 und des Pulverbetts 12 auch eine gezielte Abkühlung vornehmen zu können, sodass dadurch der Temperaturhaushalt im Pulverbett 12 und/oder dem erzeugten Bauteil 3 und vor allem die sich einstellenden Temperaturgradienten eingestellt werden können, so dass die gewünschten Druckeigenspannungen erzielt werden können. Insbesondere in Bezug auf das durch den Laserstrahl 13 aufgeschmolzene Pulvermaterial im Aufschmelzbereich und die den Aufschmelzbereich umgebende Erstarrungsfront kann die Temperaturverteilung zur Erzielung von Druckeigenspannungen eingestellt werden.

Die Kühleinrichtungen können insbesondere so vorgesehen sein, dass zwischen dem Aufschmelzbereich und dem Bereich einer Nachwärmung, beispielsweise durch induktive Heizung, eine gezielte Kühlung des erstarrenden bzw. erstarrten Materials vorgenommen werden kann. So ist beispielsweise bei der Vorrichtung der Figur 1 eine Düse 7 vorgesehen sein, mit deren Hilfe ein Kühlmedium, wie beispielsweise ein Kühlgas, auf das erstarrenden bzw. erstarrte Material geblasen werden kann. Dadurch können entsprechende Druckeigenspannungen in der aufgebauten Schicht erzeugt werden, die der Vermeidung der Rissbildung dienen.

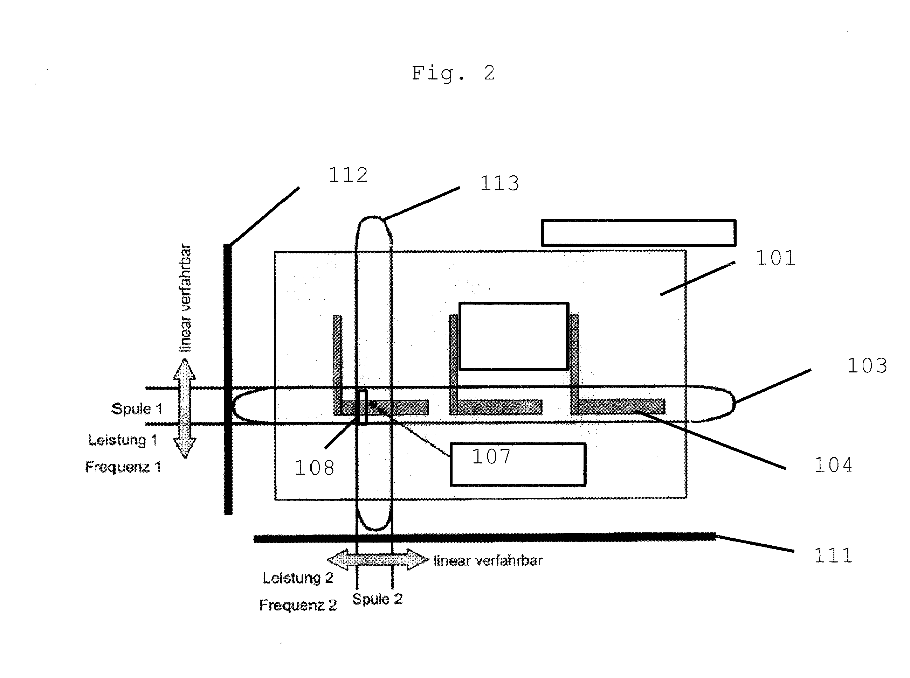

Die Figur 2 zeigt eine Draufsicht auf eine weitere Ausführungsform einer erfindungsgemäßen Vorrichtung 100, die zumindest teilweise identisch zur Ausführungsform der Fig. 1 ist bzw. in der zumindest Teile identisch ausgeführt sein können. Bei der Ausführungsform der Fig. 2 können in einem Arbeitsraum beispielsweise drei Bauteile 104 parallel hergestellt werden. Die entsprechenden Pulverbetträume sind in der Figur 2 nicht explizit dargestellt.

Die Vorrichtung gemäß Figur 2 umfasst zwei Spulen 103,113, die entlang der Schienenanordnungen 111,112 linear verfahrbar sind. Die Spulen 103, 113 erstrecken sich hierbei über die gesamte Breite bzw. Länge des Arbeitsraums und können somit sämtliche Bereiche für die Herstellung von Bauteilen 104 abdecken. Alternativ ist es auch vorstellbar, die Spulen 103,113 kleiner auszubilden, so dass sie lediglich einen Teilbereich des Arbeitsraums überdecken, wobei stattdessen zusätzlich eine lineare Verfahrbarkeit jeweils quer zu den Schienenanordnungen 111,112 vorgesehen werden kann, um die Spulen 103,113 an jeder Position des Arbeitsraums positionieren zu können.

Die Figur 2 zeigt rein schematisch mit dem Laserstrahl 107, der von oben auf die zu erzeugenden Bauteile 4 gerichtet wird, wie der Laserstrahl über dem Arbeitsraum verfahren werden kann, um die Bauteile 104 zu erzeugen. Um eine Abschattung des Laserstrahls 107 zu vermeiden, können entsprechend der Bewegung des Laserstrahls 107 auch die Spulen 103,113 bewegt werden, insbesondere kurzfristig aus dem Arbeitsbereich des Laserstrahls 107 heraus bewegt werden.

Die Spulen 103,113 sind entlang der Schienen 111,112 in einer Ebene bzw. zwei zueinander versetzten Ebenen verfahrbar, die im Wesentlichen parallel zu der Fläche ausgerichtet sind, in welcher das Pulver durch den Laserstrahl 107 aufgeschmolzen wird. Der Laserstrahl 107 kann insbesondere im Kreuzungsbereich der Spulen 103,113 vorgesehen werden, sodass einerseits das noch nicht aufgeschmolzene Pulver durch die Induktionsspulen 103,113 vorgewärmt und die bereits zu dem Bauteil erstarrte Schmelze einer Temperaturnachbehandlung unterzogen werden kann. Durch die Verfahrbarkeit der Induktionsspulen 103,113 sowie der entsprechenden Verfahrbarkeit und Ausrichtung des Laserstrahls 107 sind sämtlichen Bereiche eines Arbeitsraums mit den Pulverbetträumen erreichbar, sodass beliebige Bauteile 104 erzeugt und entsprechend behandelt werden können.

Darüber hinaus ist bei dem gezeigten Ausführungsbeispiel der Figur 2 im Kreuzungsbereich der Spulen 103, 113 ein Peltier-Element 108 vorgesehen, welches zwischen dem Laserstrahl 107 und dem von diesem erzeugten Aufschmelzbereich und dem Bereich der Nachwärmung einen Kühlbereich erzeugt, so dass die Schmelze bzw. das erstarrenden Material um die Erstarrungsfront und/oder das bereits erstarrte Material zwischengekühlt werden kann, so dass sich wiederum Druckeigenspannungen, die einer Rissbildung entgegenwirken, einstellen können.

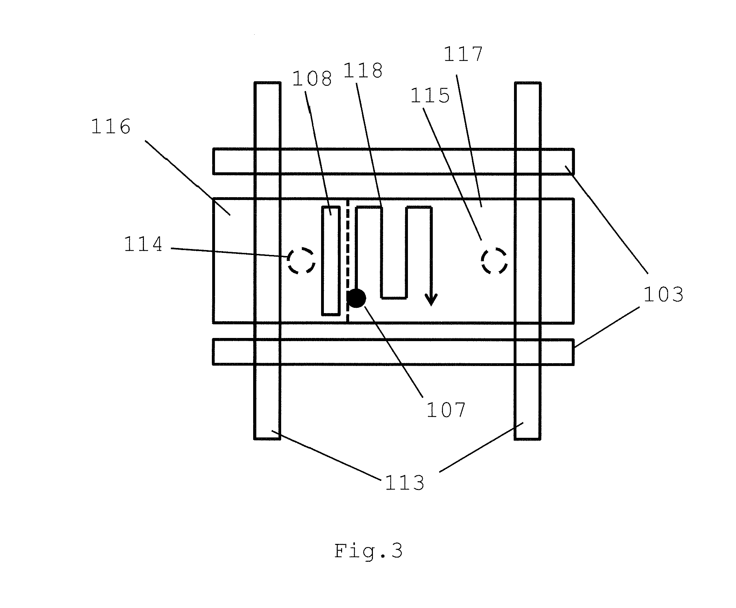

Die Figur 3 zeigt einen Ausschnitt aus der Figur 2 in größerem Detail, wobei insbesondere der Kreuzungsbereich der Induktionsspulen 103,113 gezeigt ist.

Innerhalb des Kreuzungsbereich wird der Laserstrahl 107 eingestrahlt, der entlang einer mäanderförmigen Laserspur 118 über das Pulverbett bewegt wird, um das Pulver aufzuschmelzen. Sobald sich der Laserstrahl 107 entsprechend der Laserspur 118 weiter bewegt hat, erstarrt die Schmelze wieder, um das zu erzeugende Bauteil zu bilden. Der erstarrte Bereich 116 ist in der Figur 3 im linken Bereich der Figur dargestellt. Entsprechend ist das lose Pulver, das auf dem darunterliegenden, bereits erzeugten Bauteil 104 zur Bildung der nächsten Schicht angeordnet ist, im rechten Teil der Figur 3 dargestellt und wird dort mit dem Bezugszeichen 117 für den Pulverbereich bezeichnet. Die Trennung zwischen dem Pulverbereich 117 und dem erstarrten Bereich 116 ist durch eine gestrichelte Linie schematisch dargestellt und entspricht grob der Erstarrungsfront.

Den Induktionsspulen 103,113 ist jeweils ein Temperaturmesspunkt 114,115 zugeordnet, wobei der erste Temperaturmesspunkt 114 im Bereich 116 der erstarrten Schmelze angeordnet ist, während der zweite Temperaturmesspunkt 115 im Pulverbereich 117 vorgesehen ist, so dass die Temperaturverhältnisse vor und nach dem durch den Laserstrahl 107 erzeugten Aufschmelzbereich gemessen werden können.

Ebenfalls im Kreuzungsbereich der Induktionsspulen 103, 113 ist ein Peltier-Element 108 angeordnet, welches zwischen dem Nachwärmbereich durch die Induktionsspulen 103, 113 eine Zwischenkühlung des erstarrenden Materials ermöglicht. Die Zwischenkühlung ist hierbei sowohl örtlich als auch zeitlich zu sehen, da die Kühlung mit dem Peltier-Element 108 zwischen dem vom Laserstrahl 107 erzeugten Aufschmelzbereich und dem durch die Induktionsspulen 103, 113 erzeugten Nachwärmbereich liegt (örtlich) und da in der zeitlichen Abfolge ein mit dem Bauteil zu verbindendes Pulver zunächst als Pulvermaterial vorliegt, sich dann im aufgeschmolzenen Zustand befindet, anschließend abgekühlt und dann noch einmal erwärmt wird.

Bei dem gezeigten Ausführungsbeispiel bewegt sich das Peltier-Element 108 genauso wie die Induktionsspulen 103, 113 entsprechend einer groben bzw. übergeordneten Bewegung des Laserstrahls 107 mit dem Laserstrahl 107 mit, während die Feinheiten einer beispielsweise oszillierenden Bewegung des Laserstrahls durch die Bewegung der Induktionsspulen 103, 113 und/oder dem Pelletier-Element 108 nicht nachgebildet werden.

Mit der Bewegung des Laserstrahls 107 entlang des Laserpfads 118 über die Arbeitsfläche, können die Induktionsspulen 103,113 und/oder das Peltierelement 108 ebenfalls bewegt werden, um die Anordnung bezüglich des Laserstrahls 107 im Wesentlichen beizubehalten. Allerdings ist es nicht erforderlich, jede Bewegung des Laserstrahls 107 in eine entsprechende Bewegung der Induktionsspulen 103,113 und/oder des Peltierelements umzusetzen, sondern es genügt beispielsweise, wenn der Laserstrahl 107 innerhalb des Kreuzungsbereichs der Induktionsspulen 103,113 bleibt und auch das Peltierelement 108 eine feste Position bezüglich der Induktionsspulen 103,113 einnimmt. Im gezeigten Ausführungsbeispiel bedeutet dies, dass sich der Laserstrahl 107 entlang des Laserpfads 118 zwar oszillierend im Bild der Figur 3 nach oben und nach unten bewegt, jedoch bei dieser Bewegung den Kreuzungsbereich der Induktionsspulen 103,113 nicht verlässt. Insofern kann die Induktionsspule 103 ortsfest gehalten werden. Allerdings bewegt sich der Laserstrahl 107 entlang dem Laserpfad 118 im Bild der Figur 3 von links nach rechts, sodass die Induktionsspule 113 und das Peltierelement mit zunehmender Bewegung des Laserstrahls 107 nach rechts ebenfalls nach rechts bewegt werden. Gleichzeitig werden die Temperaturmesspunkte 114,115 entsprechend der Bewegung der Induktionsspule 113 eine Bewegung nach rechts durchführen, während in einer senkrechten Richtung dazu, also im Bild der Figur 3 nach oben oder unten die Temperaturmesspunkte 114,115 genauso wie das Peltierelement 108 stationär zu der Induktionsspule 103 verbleiben. Entsprechend sind bei der gezeigten Ausführungsform das Peltierelement 108 und die beiden Temperaturmesspunkte 114,115 jeweils in einer Richtung bezüglich jeder Spule 103,113 fixiert. In der Richtung, die von links nach rechts bzw. umgekehrt in Figur 3 verläuft, sind die Temperaturmesspunkte 114,115 und das Peltierelement 108 bezüglich der Induktionsspule 113 fixiert, während in einer senkrechten Richtung dazu, also in einer Richtung in der Figur 3 von oben nach unten oder umgekehrt, sind das Peltierelement 108 und die Temperaturmesspunkte 114,115 bezüglich der Induktionsspule 103 fixiert. Damit ist es möglich, mit Fortschreiten der Erstarrungsfront gleichbleibende Temperaturbedingungen zu erzielen, sodass gleichbleibende Schmelzbedingungen mit definierten, lokalen Temperaturgradienten bei hohen Produktionsgeschwindigkeiten einstellbar sind, wobei gleichzeitig die Ausbildung von Rissen und dergleichen beim Erstarren vermieden werden kann.

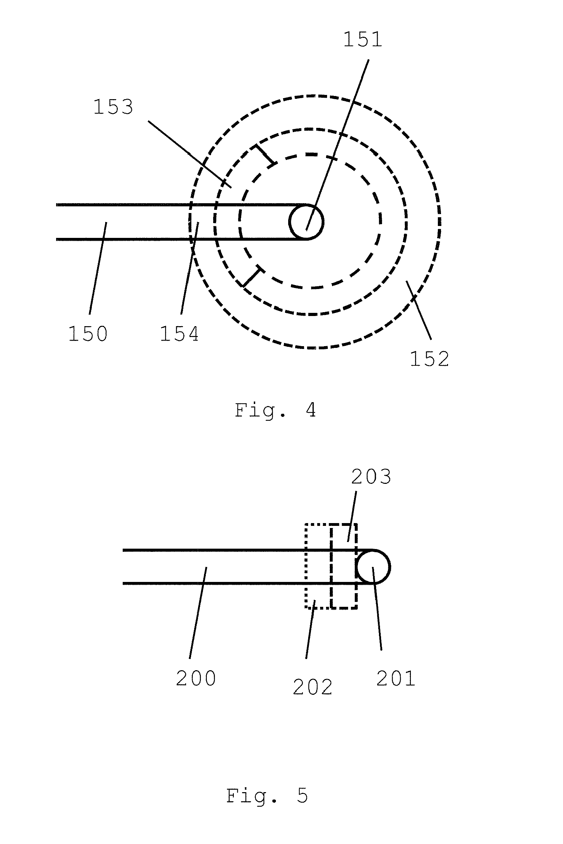

Die Figuren 4 und 5 zeigen weitere Möglichkeiten, wie entsprechende Druckeigenspannungen in das Bauteil eingebaut werden können, so dass eine Rissbildung vermieden oder verringert wird. Bei der Ausführungsform der Fig. 4 wird durch einen Laserstrahl wiederum ein Aufschmelzbereich 151 erzeugt, der entlang des Bewegungspfades 150 des Laserstrahls sich über die Pulveroberfläche bewegt. Konzentrisch um den Aufschmelzbereich 151 bzw. den Auftreffbereich des Laserstrahls ist ein Heizbereich 152 realisiert, beispielsweise durch einen Induktionsung oder eine andere ringförmige Heizeinrichtung bzw. eine Heizeinrichtung, die einen ringförmigen Erwärmungsbereich erzeugen kann. Mit dem ringförmigen Erwärmungsbereich 152 kann sowohl eine Vorwärmung des Pulvermaterials vor Auftreffen des Laserstrahls durchgeführt werden als auch eine Nachwärmung des erstarrenden bzw. erstarrten Pulvermaterials im Bewegungspfad 150, und zwar im Schnittbereich des ringförmigen Aufheizbereichs 152 und des Bewegungspfads 150 des Laserstrahls.

Zusätzlich ist ebenfalls konzentrisch zu dem Aufschmelzbereich 151 bzw. dem ringförmigen Erwärmungsbereich 152 ein teilweise ringförmiger Kühlbereich 153 vorgesehen, der zwischen dem Aufschmelzbereich 151 und dem nachfolgenden Erwärmungsbereich 152 angeordnet ist, um durch die Zwischenkühlung Druckeigenspannungen in dem aufgebauten Bauteil zu erzeugen.

Eine weitere Gestaltung eines dem Laserstrahl nachfolgenden Erwärmungsbereichs 202 und eines Kühlbereichs 203 sind in Fig. 5 gezeigt. Dort ist wieder ein Aufschmelzbereich 201 zu erkennen, der beispielsweise durch einen Laserstrahl entlang des Bewegungspfads 200 des Laserstrahls erzeugt wird. Unmittelbar anschließend wird ein in etwa rechteckförmiger Kühlbereich 203 realisiert, der quer über den Bewegungspfad 300 verläuft, so dass nicht nur das unmittelbar vorher im Aufschmelzbereich 201 gelegene Material gekühlt wird, sondern auch entsprechende Randbereiche. Dahinter schließt sich eine ebenfalls etwa rechteckförmige Erwärmungszone 202 an, die örtlich und zeitlich nachfolgend zu dem Kühlungsbereich 203 vorgesehen ist, um das Material benachbart zu dem Kühlbereich 203 bzw. das vorher gekühlte Material wieder zu erwärmen, um so ebenfalls Druckeigenspannungen in dem erzeugten Bauteil zu verursachen, die einer Rissbildung entgegenwirken.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Änderungen oder Ergänzungen in der Weise möglich sind, dass einzelne Merkmale weggelassen oder unterschiedliche Merkmalskombinationen verwirklicht werden, ohne dass der Schutzbereich der beigefügten Ansprüche verlassen wird. Die vorliegende Erfindung umfasst insbesondere sämtliche Kombinationen aller vorgestellten Einzelmerkmale.

## Patentansprüche

1. Verfahren zur generativen Herstellung von Bauteilen, insbesondere zur Herstellung von Bauteilen für Strömungsmaschinen, bei welchem das Bauteil zumindest teilweise schichtweise auf einem Substrat oder einem vorher erzeugten Teil des Bauteils aufgebaut wird, wobei ein schichtweiser Aufbau durch lagenweises Aufschmelzen von Pulvermaterial mit einem energiereichen Strahl und Erstarren der Pulverschmelze erfolgt, wobei sich der energiereiche Strahl entlang eines Pfades über das Pulvermaterial bewegt und wobei durch den energiereichen Strahl an der Front des Pfades ein Aufschmelzbereich gebildet wird und nachfolgend im Pfad ein Erstarrungsbereich entsteht,
**dadurch gekennzeichnet, dass**
im Erstarrungsbereich die Temperaturverteilung zeitlich und/oder örtlich so gewählt wird, dass im erstarrten oder erstarrenden Pulvermaterial Druckeigenspannungen entstehen.

2. Verfahren nach Anspruch 1,
**dadurch gekennzeichnet, dass**
im Erstarrungsbereich ein Nachwärmen und/oder Kühlen des erstarrenden Pulvermaterials durchgeführt werden, wobei das Nachwärmen in mindestens einem Nachwärmbereich und/oder das Kühlen in mindestens einem Kühlbereich erfolgen.

3. Verfahren nach Anspruch 2,
**dadurch gekennzeichnet, dass**
der Nachwärmbereich und/oder der Kühlbereich sich über den Pfad des energiereichen Strahls hinaus erstrecken, insbesondere den Aufschmelzbereich vorzugsweise konzentrisch umgeben.

4. Verfahren nach einem der vorhergehenden Ansprüche,
**dadurch gekennzeichnet, dass**
um den Aufschmelzbereich ein ringförmiger Heizbereich vorgesehen ist, der den Aufschmelzbereich insbesondere konzentrisch umgibt.

5. Verfahren nach einem der vorhergehenden Ansprüche,
**dadurch gekennzeichnet, dass**
sich der Nachwärmbereich und/oder der Kühlbereich und/oder der Heizbereich in fester örtlicher Beziehung zum energiereichen Strahl über das Pulvermaterial bewegen.

6. Verfahren nach einem der vorhergehenden Ansprüche,
**dadurch gekennzeichnet, dass**
das Bauteil und/oder das Pulvermaterial vorgewärmt und/oder vorgekühlt werden, insbesondere lokal kurz vor Erreichen des energiereichen Strahls oder global die gesamte Pulverschicht und/oder das gesamte Bauteil.

7. Verfahren nach Anspruch 6,
**dadurch gekennzeichnet, dass**
die Vorwärmtemperatur im Bereich von 50% bis 90%, insbesondere 60% bis 70% der Schmelztemperatur gewählt wird.

8. Verfahren nach einem der Ansprüche 2 bis 7,
**dadurch gekennzeichnet, dass**
die Kühltemperatur im Bereich von 30% bis 60% der Schmelztemperatur, vorzugsweise um 50% oder weniger der Schmelztemperatur des eingesetzten Materials gewählt wird oder im Bereich von 600-700 °C liegt.

9. Vorrichtung zur generativen Herstellung von Bauteilen, insbesondere nach dem Verfahren nach einem der vorhergehenden Ansprüche, durch schichtweises Aufbringen von Pulvermaterial auf einem Substrat oder einem vorher hergestellten Teil eines Bauteils mit einer Pulveraufbringeinrichtung, mit der eine als Schicht abzuscheidende Pulverlage auf dem Substrat oder dem Bauteil aufgebracht werden kann, und einer Strahlerzeugungseinrichtung zur Erzeugung eines energiereichen Strahls, der das aufgebrachte Pulver in einem Aufschmelzbereich aufschmilzt, sowie einer Bewegungseinrichtung zur Relativbewegung zwischen energiereichem Strahl und Pulverlage,
**dadurch gekennzeichnet, dass**
die Vorrichtung weiterhin mindestens eine Kühleinrichtung umfasst, mit der mindestens ein Bereich nahe dem Aufschmelzbereich gekühlt werden kann.

10. Vorrichtung nach Anspruch 9,
**dadurch gekennzeichnet, dass**
die Kühleinrichtung einen von einem Kühlmedium durchströmten Kühlkörper oder ein Peltierelement oder eine Sprüheinrichtung für ein Kühlmedium umfasst.

11. Vorrichtung nach Anspruch 9 oder 10,
**dadurch gekennzeichnet, dass**
die Kühleinrichtung mit dem energiereichen Strahl über die Pulverlage bewegbar ist.
